# EUROPÄISCHE PATENTSCHRIFT

(11) **EP 0 602 059 B1**
(45) Veröffentlichungstag und Bekanntmachung des Hinweises auf die Patenterteilung: **26.01.2000**
(21) Anmeldenummer: 92916701.3
(22) Anmeldetag: 05.08.1992
(51) Int. Cl.: C08G 18/58, C08G 18/48, B32B 5/18

(54) **VISCOELASTISCHER DÄMPFUNGESSCHAUM MIT ADHÄSIVER OBERFLÄCHE**
VISCOELASTIC ACOUSTIC-INSULATION FOAM WITH AN ADHESIVE SURFACE
MOUSSE VISCOELASTIQUE A SURFACE ADHESIVE POUR L'ISOLATION ACOUSTIQUE

(30) Priorität: 06.09.1991 DE 4129666
(43) Veröffentlichungstag der Anmeldung: 22.06.1994
(73) Patentinhaber: Stankiewicz GmbH, D-29352 Adelheidsdorf (DE)
(72) Erfinder: KITTEL, Christoph, D-3101 Nienhagen (DE); BURAK, Gerhard, D-3101 Adelheidsdorf (DE); KLIWER, Carsten, D-3101 Nienhagen (DE); PETERS, Cornelia, D-3108 Wolthausen (DE)
(74) Vertreter: Melzer, Wolfgang, Dipl.-Ing.
(86) Internationale Anmeldenummer: EP9201780
(87) Internationale Veröffentlichungsnummer: WO9305091

(56) Entgegenhaltungen:
- EP-A- 0 367 283
- AT-C- 315 506
- AT-C- 344 403
- DE-A- 2 547 697
- DE-A- 3 630 225
- DE-A- 3 806 476
- DE-A- 4 001 044
- US-A- 4 259 452
- US-A- 4 303 755
- US-A- 4 698 408

## Beschreibung

Die Erfindung betrifft einen viscoelastischen Dämpfungsschaum mit adhäsiver Oberfläche zur kraftschlüssigen Ankopplung an schwingende Flächen zur Körperschalldämpfung.

Es sind zwar die unterschiedlichsten Polyurethanweichschaumstoffe für die Schallisolation bekannt, jedoch eignen sie sich nicht, wie der erfindungsgemäße Schaumstoff, zur Entdröhnung. So beschreiben die DE-AS 19 23 161 und die DE-OS 28 35 329 mineralisch gefüllte Schaumstoffe, die aufgrund ihrer hohen Dichte von 500 bis 1.250 kg/m³ gute Schalldämmung ermöglichen. Eine Entdröhnung von Blechen ist mit diesen Materialien jedoch nicht möglich, da der Verlustfaktor dieser Schaumstoffe zu gering ist.

Die DE-PS 27 56 622 ist zwar auf die Herstellung von Schaumstoffen mit hohen Verlustfaktoren abgestellt, jedoch ist das beschriebene Verfahren, nämlich die Tränkung offenporiger Polyurethan- oder PVC-Schaumstoffe mit viscoelastischen Stoffen, z. B. anorganische Füllstoffe enthaltenden Polyolefinen oder organischen Harzen bzw. Wachsen, mit erheblichem Aufwand verbunden.

Aus der DE-OS 37 10 731.3 ist bekannt, daß Polyurethanweichschaumstoffe mit adhäsiven Eigenschaften erhalten werden können, wenn ein Polyisocyanat oder ein Polyisocyanatprepolymer mit im Überschuß vorliegenden Polyolen oder deren Gemischen umgesetzt wird, bei Einhaltung eines NCO-Indexes von ≤ 80. Genutzt wird also die Untervernetzung von Isocyanat und Polyol, um zu den gewünschten Oberflächeneigenschaften zu kommen. Die nach diesem Stand der Technik herstellbaren Schaumstoffe haben jedoch den Nachteil, daß die mechanischen Kennwerte gegenüber Schaumstoffen auf 2-Komponenten-Polyurethan-Basis, die im stöchiometrischen Verhältnis hergestellt werden, ungünstiger ausfallen.

Demzufolge besteht die Aufgabe der Erfindung darin, einen viscoelastischen Schaumstoff bereitzustellen, der auf Basis von Polyurethan in stöchiometrisch ausgeglichenen Mengen aus mindestens zwei verschiedenen, untereinander unverträglichen Polyolen und Isocyanat mit den üblichen Zusätzen hergestellt wird. Dieser so hergestellte viscoelastische Schaumstoff weist adhäsive Oberflächen zur kraftschlüssigen Ankopplung an schwingende Flächen, sowie einen Verlustfaktor d₂ ≥ 0,4 und einen Elastizitätsmodul ≤ 150,000 N/m² auf und besitzt die erforderlichen Kenndaten zur Schallisolation. Dies betrifft für das reine Belagmaterial den Verlustfaktor d₂, gemäß DIN 53 440 und den Elastizitätsmodul E₂.

Diese Aufgabe wird erfindungsgemäß dadurch gelöst, daß das Isocyanat mit mindestens 2 Polyolen, vorzugsweise vom Polyethertyp, die miteinander unverträglich sind, in stöchiometrischen Mengen umgesetzt wird. Die beiden Polyole sind zwar miteinander mischbar, jedoch nur aufgrund ihrer hohen Viskosität bzw. Dickflüssigkeit. Sie sind jedoch miteinander unverträglich, weil sie sich nach einiger Zeit vollständig entmischen. Der Entmischungsprozeß läuft relativ langsam ab, weil er gegen die Viskosität "arbeiten" muß.

Die verwendeten Polyether-Polyole sind durch eine OH-Zahl ≤ 100 gekennzeichnet und auf der Basis von ca. 75 % Ethylenoxid in Anwesenheit eines Starters hergestellt. Übliche Polyetherpolyole basieren z. B. auf 15 bis 20 % Ethylenoxid. Mischungen aus diesen beiden Polyether-Polyoltypen sind miteinander unverträglich. Auf hoher Ethylenoxidbasis hergestellte Polyether-Polyole werden gemäß Stand der Technik als Zellöffner eingesetzt mit etwa 0,5 bis 5 % bezogen auf die Gesamtmischung. Zusammensetzungen gemäß vorliegender Erfindung enthalten demgegenüber deutlich größere Mengen, wie z. B. 50 %.

Das auf niedriger Ethylenoxidbasis hergestellte Polyether-Polyol ist reaktionsfreudiger als das Polyol auf hoher Ethylenoxidbasis, welches sich daher an den Außenflächen anreichert. Die Reaktion im Schaumteil läuft stöchiometrisch ausgeglichen ab. Es liegt keine Untervernetzung vor, vielmehr basiert die adhäsive Oberfläche überraschenderweise auf der Wirkung funktioneller Gruppen. Die erfindungsgemäß erzielte Adhäsivität ist bei einer Funktionalität des Polyether-Polyols auf hoher Ethylenoxidbasis von 2 bis 4 gegeben.

Bei der exothermen Reaktion von Polyolen mit Isocyant entsteht beim Befüllen des Werkzeuges in den inneren Kernzonen des entstehenden Teils eine höhere Temperatur als an den Außenbereichen bzw. an den Oberflächen. Die Wärme wird über die Werkzeugoberfläche rasch abgeführt. Durch die niedrige Temperatur im Oberfächenbereich des entstehenden Schaumteiles wird dort die Reaktionsgeschwindigkeit herabgesetzt, wodurch die Separation der mindestens 2 miteinander unverträglichen Polyole einsetzt.

Wegen der notwendigen Wärmeabführung darf das Werkzeug nur mäßig beheizt werden, weil sonst die adhäsiven Oberflächen nicht entstehen. Für die Ausführungsform der erfindungsgemäßen Schaumgemische sind nachstehend zwei Beispielrezepturen angegeben. Die Herstellung der Produkte erfolgt vorzugsweise durch Zuführung der Reaktionskomponenten, dem Polyolsystem einerseits und dem Polyisocyanatsystem andererseits in den Mischkopf einer RIM (Reaction Injection Molding)-Anlage.

Für das Polyolsystem (Komponente A) wurden zwei verschiedene Rezepturen getestet, Rezeptur 1 mit einem hohen Anteil an einem Polyetherpolyol auf Ethylenoxidbasis und Rezeptur 2 mit einem geringen Anteil des Polyetherpolyols auf Ethylenoxidbasis. Die Reaktion zwischen der Komponente A und dem Polyisocyanat (Komponente B) wurde wie oben beschrieben in stöchiometrischen Mengen durchgeführt. Die Komponente A setzt sich wie folgt zusammen:

### Komponente A:

| Rezeptur 1 | Rezeptur 2 | |
|---|---|---|
| 400 Gew.-T. | 800 Gew.-T. | Desmophen 3900 |
| 800 Gew.-T. | 400 Gew.-T. | Arcol 2580 |
| 40 Gew.-T. | 40 Gew.-T. | Wasser |
| 20 Gew.-T. | 20 Gew.-T. | DMEA |
| 2,4 Gew.-T. | 0,6 Gew.-T. | Tegostab B 1400 |
| 8 Gew.-T. | 8 Gew.-T. | DABCO TD 100 |
| 16 Gew.-T. | 16 Gew.-T. | Dipropylenglycol |

wobei
Desmophen 3900 ein Polyetherpolyol auf Propylenoxidbasis mit einem Anteil von ungefähr 18 % Ethylenoxid, einem MG von 4800 und einer OH-Zahl von 35 ist,
Arcol 2580 ein Polyetherpolyol auf Ethylenoxidbasis mit einem Anteil von ca. 70 % Ethylenoxid, einem Starter beispielsweise TMP (= Trimethylolpropan) einem MG von 4000 und einer OH-Zahl von 42 ist,
DMEA gleich Dimethylethylamin ist und als Hilfsstoff zugesetzt wird,
Tegostab B 1400 ein Zellstabilisator ist und
DABCO TD 100 gleich Triethylendiamin ist und als Katalysator für Vernetzen und Schäumen wirkt.

Die Komponente B besteht aus Diphenylmethan-4,4-Diisocyanat mit einem NCO-Gehalt von 28 % z. B. Prepolymer Suprasec VM 27, aber auch andere Isocyanate wie z. B. Roh-MDI sind möglich

Das stöchiometrische Verhältnis von A : B beträgt 100 Gewichtsteile A : 46 Gewichtsteilen B.

Das Verhältnis des Polyetherpolyols auf Propylenoxidbasis zum dem Polyetherpolyol auf Ethylenoxidbasis beträgt also im Beispiel 2 : 1 bzw. 1 : 2. Die angegebenen Rezepturen sind Basisrezepturen, die nach Maßgabe der Lösung der erfindungsgemäßen Aufgabe verändert werden können. Die gewünschte Adhäsivität der so erzeugten Schaumstoffe läßt sich über den Anteil an Arcol 2580 regulieren. Je höher der Anteil des Polyetherpolyols auf Ethylenoxidbasis ist, desto größer ist die Adhäsivität des Schaumstoffes. Wie weiterführende Versuche gezeigt haben, kann das Verhältnis des Polyetherpolyols auf Propylenoxidbasis zum Polyetherpolyol auf Ethylenoxidbasis bis etwa auf das Verhältnis 5 : 1 bis 1 : 5 gebracht werden, wodurch sich die Adhäsivität fein abstufen läßt.

Die gewünschte Adhäsivität der so erzeugten Schaumstoffe läßt sich über den Anteil an Arcol 2580 regulieren, je höher der Anteil des Polyetherpolyols auf Ethylenoxidbasis ist, desto größer ist die Adhäsivität des Schaumstoffes.

Aus den so hergestellten Schaumteilen wurden Probekörper entnommen und auf die physikalisch akustischen Parameter hin untersucht. Es ergaben sich Werte für den Verlustfaktor d₂ ≥ 0,4 und für den Elastizitätsmodul E₂ ≤ 150.000 N/m². Die Materialdichte (spezifisches Gewicht) ist nachrangig, weil sie wesentlich durch den Produktionsprozeß und durch die Formgeometrie bestimmt wird. Als grober Richtwert mag gelten, daß sich Werte zwischen 60 und 150 kg/m³ für Teile einstellen, wie sie üblicherweise zur Schallisolation im Stirnwand-Boden-Bereich eines Fahrzeuges eingesetzt werden.

Die Verwendung der viscoelastischen Dämpfungsschäume mit adhäsiven Oberflächen ist nicht auf die Körperschalldämpfung schwingender Flächen beschränkt, sondern erstreckt sich auch auf die Nutzung als akustisches Federelement in sogenannten Masse-Feder-Systemen auf beliebigen schwingenden und schallabstrahlenden Flächen. In größeren Schichtdicken und insbesondere bei Verwendung als Feder im Masse-Feder-System wird die Luftschalldämmung der zu schallisolierenden Flächen erhöht.

## Patentansprüche

1. Dämpfungsschaum zur Körperschalldämpfung,
erhältlich durch Umsetzen von Polyisocyanat mit mindestens zwei verschiedenen Polyolen vorzugsweise vom Polyethertyp,
**dadurch gekennzeichnet,**
daß zum Erreichen eines viscoelastischen Dämpfungsschaums mit einer Oberfläche mit adhäsiver Eigenschaft zur kraftschlüssigen Ankopplung an schwingende Flächen
die Umsetzung stöchiometrisch erfolgt, und
die Polyole untereinander unverträglich sind,
derart, daß der entstandene Dämpfungsschaum einen Verlustfaktor d₂ ≥ 0,4 (gemäß DIN 53 440) und einen Elastizitätsmodul E₂ ≤ 150.000 N/m² aufweist.

2. Viscoelastischer Dämpfungsschaum nach Anspruch 1, dadurch gekennzeichnet, daß sich die Polyolkomponente aus einem Polyetherpolyol auf Propylenoxidbasis und ein Polyetherpolyol auf Ethylenoxidbasis zusammensetzt.

3. Viscoelastischer Dämpfungsschaum nach Anspruch 1 oder Anspruch 2, dadurch gekennzeichnet, daß das Verhältnis des Polyetherpolyols auf Propylenoxidbasis zu dem Polyetherpolyol auf Ethylenoxidbasis 5 : 1 bis 1 : 5 beträgt.

4. Verwendung des viskoelastischen Dämpfungsschaumes mit adhäsiver Oberfläche zur kraftschlüssigen Ankopplung an schwingende Flächen zur Körperschalldämpfung nach den Ansprüchen 1 bis 3 als akustisches Federelement in Masse/Feder Systemen zur Erhöhung der Luftschalldämmung der zu isolierenden Flächen.

## Claims

1. Damping foam for solid-borne sound absorption,
obtainable through reaction of polyisocyanate with at least two different polyols, preferably of the polyether type,
characterised in that,
in order to attain a visco-elastic damping foam having a surface with adhesive properties for adhesion coupling to vibrating surfaces,
the reaction occurs stoichiometrically, and
the polyols are incompatible with one another,
such that the obtained damping foam has a loss factor d₂ ≥ 0.4 (according to DIN 53 440) and a modulus of elasticity ≤ 150,000 N/m².

2. Visco-elastic damping foam according to claim 1, characterised in that the polyol component is composed of a polyether polyol based on propylene oxide and a polyether polyol based on ethylene oxide.

3. Visco-elastic damping foam according to claim 1 or claim 2, characterised in that the ratio of the polyether polyol based on propylene oxide relative to the polyether polyol based on ethylene oxide is 5:1 to 1:5.

4. Use of the visco-elastic damping foam with an adhesive surface for adhesion coupling to vibrating surfaces, for solid-borne sound absorption, according to claims 1 to 3, as an acoustic spring element in mass/spring systems to increase the airborne sound damping of the surfaces to be insulated.

## Revendications

1. Mousse d'amortissement pour l'amortissement du bruit de structure, obtenue par transformation de polyisocyanate avec au moins deux polyols différents de préférence de type polyester,
caractérisé en ce que
pour obtenir une mousse d'amortissement visco-élastique avec une surface à propriété adhésive pour l'accouplement à force à des surfaces vibrantes,
la transformation s'effectue de manière stoechiométrique, et
les polyols sont incompatibles entre eux,
de manière que la mousse d'amortissement qui en résulte présente un facteur de perte d2 ≥ 0,4 (selon DIN 53 44 0) et un module d'élasticité E2 ≤ 150 000 N/m2.

2. Mousse d'amortissement visco-élastique selon la revendication 1, caractérisée en ce que le composant polyol se compose d'un polyétherpolyol à base d'oxyde de propylène et d'un polyétherpolyol à base d'oxyde d'éthylène.

3. Mousse d'amortissement visco-élastique selon la revendication 1 ou 2, caractérisée en ce que le rapport entre le polyétherpolyol à base d'oxyde de propylène et le polyétherpolyol à base d'oxyde d'éthylène est compris entre 5 à 1 et 1 à 5.

4. Utilisation de la mousse visco-élastique à surface adhésive pour l'accouplement à force sur des surfaces vibrantes pour l'amortissement du bruit de structure selon les revendications 1 à 3 en tant qu'élément acoustique à ressort dans des systèmes masse/ressort pour accroître l'amortissement du bruit transmis par l'air des surfaces à isoler.
